**Europäisches Patentamt**

**European Patent Office**

**Office européen des brevets**

(11) Veröffentlichungsnummer: **0 143 875**

**A1**

# (12) EUROPÄISCHE PATENTANMELDUNG

(21) Anmeldenummer: **84106676.4**

(22) Anmeldetag: **12.06.84**

(51) Int. Cl.⁴: **C 08 J 3/00**
C 08 L 67/02
//(C08L67/02, 75:02)

(30) Priorität: **08.08.83 DE 3328567**

(43) Veröffentlichungstag der Anmeldung:
**12.06.85 Patentblatt 85/24**

(84) Benannte Vertragsstaaten:
**CH DE FR GB IT LI NL**

(71) Anmelder: **CHEMISCHE WERKE HÜLS AG**
**- RSP Patente / PB 15 - Postfach 13 20**
**D-4370 Marl 1(DE)**

(72) Erfinder: **Horlbeck, Gernot, Dr.**
**In der Thiebrei 80**
**D-4358 Haltern(DE)**

(72) Erfinder: **Mumcu, Salih, Dr.**
**Leverkusener Strasse 12**
**D-4370 Marl(DE)**

(54) **Verfahren zur Herstellung von kerbschlagzähen Formmassen auf Basis von Poly(alkylenterephthalaten).**

(57) Verfahren zur Herstellung von kerbschlagzähen Formmassen, wobei Kunststoffmischungen aus

    A. 60 bis 97 Gew.-% Poly(alkylenterephthalat)
und

    B. 3 bis 40 Gew.-% eines an sich bekannten Polyetheresteramids
bei Temperaturen 15 bis 60 °C unterhalb des Schmelzpunktes der reinen Komponente A. in einer Inertgasatmosphäre thermisch behandelt werden.

EP 0 143 875 A1

## Verfahren zur Herstellung von kerbschlagzähen Formmassen auf Basis von Poly(alkylenterephthalaten)

Gegenstand der Erfindung ist ein Verfahren zur Herstellung von kerbschlagzähen Formmassen erhalten durch thermische Behandlung von Kunststoffmischungen, die überwiegend Poly(alkylenterephthalat) enthalten, in fester Form - sowie die so erhaltenen Formmassen als solche.

Poly(alkylenterephthalate) sind wertvolle Konstruktionswerkstoffe mit einer Reihe ausgezeichneter Eigenschaften wie hoher Steifigkeit, Oberflächenhärte, Abriebfestigkeit, guter Wärmeformbeständigkeit, Dimensionsstabilität und schneller Verarbeitbarkeit zu komplizierten und großen Formteilen.

Für manche Anwendungsbereiche ist jedoch die Kerbschlagzähigkeit der Poly(alkylenterephthalate) insbesondere bei Temperaturen unterhalb von 20 $^\circ$C ungenügend, so daß die Notwendigkeit besteht, Poly(alkylenterephthalat)-Formmassen mit verbessertem Niveau der Kerbschlagzähigkeit zu entwickeln.

Es existieren bereits zahlreiche Vorschläge, die Kälteschlagzähigkeit von Poly(alkylenterephthalat)-Formmassen durch Einkondensation aliphatischer Dicarbonsäuren oder Diolgemische oder durch Abmischen mit anderen Polymeren wie modifizierten Elastomeren und Polyolefinen zu verbessern.

Allen beschriebenen Maßnahmen haftet jedoch der Mangel an, daß entweder die Zunahme der Kälteschlagzähikeit nur geringfügig ist oder daß eine deutliche Verbesserung der Kälteschlagzähigkeit mit einer unerwünschten Verschlechterung anderer Eigenschaften, insbesondere der Steifigkeit und Wärmeformbeständigkeit, verbunden ist.

0148875

So beschreibt insbesondere DE-OS 29 30 343 Formmassen
auf Basis von Poly(alkylenterephthalat), die Polyetheresteramide eingemischt enthalten, um die Schlagzähigkeit zu verbessern. Es hat sich jedoch als nachteilig
erwiesen, daß relativ hohe Anteile des Polyetheresteramids
in das Poly(alkylenterephthalat) eingearbeitet werden
müssen, um überhaupt eine Anhebung des Niveaus der Kerbschlagzähigkeit zu erreichen. Infolge solcher hohen Anteile der zweiten Komponente verschlechtern sich Steifigkeit und Wärmeformbeständigkeit des Polyesters deutlich.

Aufgabe der Erfindung war es, die geschilderten Nachteile
des Standes der Technik zu beheben.

Es wurde nun ein Verfahren zur Herstellung verbesserter
Formmassen gefunden, in dem eine Kunststoffmischung aus

A. 60 bis 97 Gew.-% Poly(alkylenterephthalat)

und

B. 3 bis 40 Gew.-% eines an sich bekannten
Polyetheresteramids

bei Temperaturen 15 bis 60 $^{o}$C unterhalb des Schmelzpunktes der reinen Komponente A. in einer Inertgasatmosphäre behandelt wird.

Weiterer Gegenstand der Erfindung sind die Formmassen,
die nach dem oben geschilderten Verfahren erhalten werden.

Als Poly(alkylenterephthalate) für die Komponente A.
kommen Poly(ethylenterephthalat), Poly(propylenterephthalat) und vorzugsweise Poly(butylenterephthalat)
in Frage.

- 3 -

0143875

Bis zu 20 Mol-%, vorzugsweise 5 bis 15 Mol-%, der Terephthalsäure im Poly(alkylenterephthalat) können durch aromatische,
cycloaliphatische oder aliphatische Dicarbonsäuren ersetzt
werden. Beispiele geeigneter Dicarbonsäuren sind Isophthalsäure, Phthalsäure, Cyclohexan-1.4-dicarbonsäure, Adipinsäure, Sebazinsäure, Azelainsäure, Decandicarbonsäure o. ä.

Bis zu 20 Mol-%, vorzugsweise 5 bis 15 Mol-%, des jeweiligen Alkandiols im Poly(alkylenterephthalat) können
durch andere Diole wie beispielsweise Ethylenglykol,
Propandiol-(1.3), Hexandiol-(1.6), Neopentylglykol,
1.4-Dimethylolcyclohexan, Dodecandiol-(1.12) o. ä. ersetzt sein.

Das erfindungsgemäß verwendete Poly(alkylenterephthalat)
wird in üblicher Weise durch Um- oder Veresterung und anschließende Polykondensation von Terephthalsäure oder deren polyesterbildenden Derivaten sowie dem entsprechenden
Alkandiol in Gegenwart von Katalysatoren hergestellt
(Sorensen und Campbell, Preparative Methods of Polymer
Chemistry, Interscience Publishers Inc., N.Y., 1961,
Seiten 111 bis 127; Kunststoff-Handbuch, Band VIII,
C. Hanser Verlag München, 1973, bzw. Journal of Polymer
Science, Part A 1, 4, Seiten 1851 bis 1859, 1966).

Das Poly(alkylenterephthalat), welches erfindungsgemäß
eingesetzt wird, besitzt eine Viskositätszahl (J) von
$>60$ cm$^3$/g, vorzugsweise von 65 bis 95 cm$^3$/g.

Die Polyetheresteramide der Komponente B. werden durch
Kondensieren von

    1. einer oder mehrerer polyamidbildender Verbindungen aus der Gruppe der $\omega$-Aminocar-
       bonsäuren bzw. Lactame mit mindestens 10
       C-Atomen,

    2. einem Poly(alkylenglykol) mit einem Molekulargewicht im Bereich von 400 bis 6 000,

3. einer oder mehrerer weiterer aliphatischer, cycloaliphatischer oder aromatischer Dicarbonsäuren

erhalten.

Als polyamidbildende Verbindung (B.1) werden $\omega$-Aminocarbonsäuren bzw. Lactame mit mindestens 10 C-Atomen, vorzugsweise Laurinlactam, $\omega$-Aminododecansäure oder $\omega$-Aminoundecansäure, verwendet. Eine weitere bevorzugte Möglichkeit besteht darin, anstelle der monomolekularen Aminocarbonsäuren, deren Polymere mit einem mittleren Molekulargewicht von 500 bis 20 000, vorzugsweise von 4 000 bis 10 000, einzusetzen.

Die angegebenen Werte für die mittleren Molekulargewichte ergeben sich durch Bestimmung der Viskositätszahl.

Poly(alkylenglykole) der Komponente B.2 sind Poly(ethylenglykol), Poly(propylenglykol) oder Poly(tetrahydrofuran)-diol mit jeweils einem mittleren Molekulargewicht im Bereich von 400 bis 6 000, vorzugsweise 500 bis 2 500. Bevorzugt ist die Verwendung von Poly(tetrahydrofuran)diol mit einem mittleren Molekulargewicht ($\bar{M}_n$; bestimmt durch Endgruppentitration) von 500 bis 2 500.

Die Komponente B.3 wird durch aliphatische, cycloaliphatische oder aromatische Dicarbonsäuren mit 4 bis 11 C-Atomen im Kohlenstoffgerüst gebildet. Beispielsweise seien Adipinsäure, Pimelinsäure, Korksäure, Azelainsäure, Sebazinsäure, Dodecandisäure, Hexahydroterephthalsäure oder die Phthalsäuren genannt. Bevorzugt für diese Komponente werden Terephthalsäure und Dodecandisäure eingesetzt.

Die Polyetheresteramide sind in der Weise aufgebaut, daß sich das Gewichtsverhältnis der Komponente B.1 und (B.2 + B.3) im Bereich von 20 : 80 bis zu 50 : 50 bewegt. Bevorzugt ist ein Gewichtsverhältnis im Bereich von 25 bis 45 : 75 bis 55. Die Hydroxyl- und Carboxylgruppen von (B.2 + B.3) liegen in etwa äquivalenten Anteilen, d. h. in einem Verhältnis von 1 : 0.95 bis 1 : 1.05, vor.

Bevorzugte Polyetheresteramide werden durch Umsetzung von Laurinlactam, Poly(tetrahydrofuran)diol mit dem mittleren Molgewicht von 650 bis 2 000 und Dodecandisäure hergestellt. Das mittlere Molekulargewicht dieser Produkte liegt im Bereich von 5 000 bis 20 000, vorzugsweise 8 000 bis 15 000.

Die Herstellung derartiger Polyetheresteramide ist beispielsweise aus DE-OS 27 12 987 bzw. 29 30 343 zu entnehmen.

Die Polyetheresteramide haben zu 3 bis 40 Gew.-%, vorzugsweise 8 bis 30 Gew.-%, Anteil an der Kunststoffmischung. Der Rest wird durch das Poly(alkylenterephthalat) der Komponente A. gebildet.

Zur Durchführung der thermischen Behandlung der Kunststoffmischungen werden die Komponenten A. und B. miteinander gemischt. Um bei der weiteren Bearbeitung Entmischungserscheinungen zu vermeiden, wird das Gemisch vorzugsweise aufgeschmolzen, homogenisiert und anschließend in die endgültige Bearbeitungsform gebracht, wie z. B. Pellets, Granulate, Pulver etc. Bevorzugt wird dieser Arbeitsgang in einem Extruder bei Temperaturen von ca. 260 bis 280 $^\circ$C durchgeführt. Jedoch kann auch jedes andere bekannte und für den genannten Zweck brauchbare Verfahren angewendet werden.

Die so hergestellte Kunststoffmischung wird etwa 2 bis 12 Stunden, vorzugsweise 4 bis 10 Stunden, bei einer Temperatur, die 15 bis 60 $^\circ$C, vorzugsweise 20 bis 50 $^\circ$C, unterhalb des Schmelzpunktes der jeweiligen reinen Komponente A. liegt, in einer Inertgasatmosphäre und vorzugsweise unter Bewegen der Kunststoffmischung thermisch behandelt. Es kann sowohl bei Normaldruck als auch in einem leichten Vakuum gearbeitet werden. Die Behandlung kann z.B. in einem Taumeltrockner oder Wirbelschichtreaktor durchgeführt werden.

Als Inertgas kommt insbesondere Stickstoff in Frage. Es können aber auch andere Inertgase eingesetzt werden. Es hat sich als vorteilhaft erwiesen, wenn in einem leichten Inertgasstrom gearbeitet wird.

Übliche Zusatz- und Hilfsstoffe wie Pigmente, Verarbeitungsmittel, Füll- und Verstärkungsstoffe, Hydrolyse-, Thermo- oder UV-Stabilisatoren können sowohl während der Herstellung (Schmelzmischung) als auch in die fertigen, behandelten Formmassen eingearbeitet werden.

Das erfindungsgemäße Verfahren zeichnet sich gegenüber dem Stand der Technik dadurch aus, daß

a) Poly(alkylenterephthalat)-Formmassen schon durch wesentlich geringere Polyetheresteramid-Zusätze kerbschlagzäh eingestellt werden können und somit hohe Steifigkeit und Wärmeformbeständigkeit neben gutem Zähigkeitsniveau aufweisen, und

b) Poly(alkylenterephthalat)-Formmassen, die mit dem bisher zur Erzielung einer nur mäßigen Kerbschlagverbesserung notwendigen hohen Polyetheresteramid-Anteil modifiziert werden, jetzt eine ausgezeichnete Kerbschlagzähigkeit, insbesondere bei tieferer Temperatur, zeigen.

Der Lösungsweg ist vor allem deswegen für einen Fachmann überraschend, da sowohl die Festphasennachkondensation einer reinen Poly(alkylenterephthalat)-Formmasse als auch das einfache Abmischen derartiger Formmassen mit einer Vielzahl die Kerbschlagzähigkeit verbessernder Polymeren nicht die beabsichtigten Ergebnisse erbracht haben. Ebenso

Tabelle 1

| Versuch | Kunststoffmischung $/\overline{\text{Gew.-Teile}}7$ | Bedingungen der thermischen Behandlung | | |
| --- | --- | --- | --- | --- |
| | | Temperatur $/^{\circ}C7$ | Zeit $/\overline{h}7$ | $N_2$-Strom $/\overline{1/h}7$ |
| 1 | 90 PBTP [1]) $(J = 90 \text{ cm}^3/g)$<br>10 PAE [2]) enthaltend<br>30 Gew.-% LL [3])<br>70 Gew.-% PTHF [4])/DDS [5])<br>(äquimolar; $J = 160 \text{ cm}^3/g$) | 205 | 4 | 100 |
| 2 | 85 PBTP [1]) $(J = 90 \text{ cm}^3/g)$<br>15 PAE [2]) (Zusammensetzung gemäß<br>Versuch 1) | 200 | 3 | 120 |
| 3 | 80 PBTP [1]) $(J = 90 \text{ cm}^3/g)$<br>20 PAE [2]) enthaltend<br>50 Gew.-% LL [3])<br>50 Gew.-% PTHF [4])/DDS [5])<br>(äquimolar; $J = 155 \text{ cm}^3/g$) | 195 | 5 | 80 |
| 4 | 85 PBTP [1]) $(J = 90 \text{ cm}^3/g)$<br>15 PAE [2]) enthaltend<br>25 Gew.-% LL [3])<br>75 Gew.-% PTHF [4])/TS [6])<br>(äquimolar; $J = 157 \text{ cm}^3/g$) | 190 | 6 | 100 |

0143875

unerwartet ist das erfindungsgemäße Ergebnis auch deswegen, weil die Abmischung aus einem der Festphasennachkondensation unterworfenen Polyester mit einem Polyetheresteramid keine besondere Wirkung ergibt - eine deutliche Wirkung ergibt sich erst dann, wenn die Kunststoffmischung selbst den erfindungsgemäßen Bedingungen unterworfen wird. -

Die in der Beschreibung und in den Beispielen aufgeführten Parameter wurden mittels der nachstehend genannten Meßmethoden bestimmt:

Die Viskositätszahl (J) des Poly(alkylenterephthalats) sowie der Formmassen Poly(alkylenterephthalat) und Polyetheresteramid selbst wurde an Lösungen von 0,23 g Polyester in 100 ml Phenol/sym-Tetrachlorethan (60/40 Gew.-Teile) bei 25 $^\circ$C gemessen.

Die Viskositätszahl (J) der reinen Polyetheresteramide wurde an Lösungen von 0,5 g Produkt bei 25 $^\circ$C in 100 ml m-Kresol bestimmt (DIN 53 727).

Kerbschlagzähigkeit gemäß DIN 53 453
Grenzbiegespannung gemäß DIN 53 452
Zug-E-Modul gemäß DIN 53 457/2.1
Wärmeformbeständigkeit gemäß ISO/R 75 (Verfahren A und B)

Die mit Buchstaben gekennzeichneten Beispiele sind nicht erfindungsgemäß. -

Beispiele

In einem 0,5 m$^3$-Taumeltrockner werden 120 kg der Kunststoffmischung in Form von Granulat (Zusammensetzung s. Tabelle 1) unter den in Tabelle 1 angegebenen Bedingungen thermisch behandelt.
Die charakteristischen Eigenschaften der Formmassen werden in Tabelle 2 und 3 wiedergegeben.

Fortsetzung Tabelle 1

| Versuch | Kunststoffmischung<br>/Gew.-Teile7 | Bedingungen der thermischen Behandlung | | |
|---|---|---|---|---|
| | | Temperatur<br>/°C7 | Zeit<br>/h7 | $N_2$-Strom<br>/l/h7 |
| A | 100 PBTP [1] ($J = 90$ cm$^3$/g) | 210 | 4 | 100 |
| B | 100 PBTP [1] ($J = 95$ cm$^3$/g) | 200 | 10 | 150 |
| C | 90 PBTP [1] ($J = 107$ cm$^3$/g)<br>10 PAE [2] (Zusammensetzung gemäß<br>Versuch 3) | - | - | - |
| D | 80 PBTP [1] ($J = 104$ cm$^3$/g)<br>20 PAE [2] (Zusammensetzung gemäß<br>Versuch 1) | - | - | - |

[1] PBTP: Poly(butylenterephthalat) - Viskositätszahl vor dem Einmischen

[2] PAE: Polyetheresteramid

[3] LL: Laurinlactam

[4] PTHF: Poly(tetrahydrofuran)diol (Molmasse 1 000 - Zahlenmittel)

[5] DDS: Dodecandisäure

[6] TS: Terephthalsäure

Tabelle 2

| Versuch | Zug-E-Modul $[N/mm^2]$ | Grenzbiegespannung $[N/mm^2]$ | Wärmeformbeständigkeit $[°C]$ | |
|---------|------------------------|-------------------------------|-------------------------------|----------------|
| | | | Verfahren A | Verfahren B |
| | | 81 | 65 | 156 |
| 1 | 2 100 | 77 | 62 | 152 |
| 2 | 2 000 | 75 | 59 | 148 |
| 3 | 1 870 | 71 | 57 | 146 |
| 4 | 1 750 | | | |

Tabelle 3

| Versuch | Viskositätszahl (J) der Kunststoffmischung $[cm3/g]$ vor der thermischen Behandlung | nach | Kerbschlagzähigkeit $[kJ/m^2]$ vor der thermischen Behandlung 23 °C | nach 23 °C | -20 °C |
|---|---|---|---|---|---|
| 1 | 92  | 113    | 5,2  | 21,3    | 11,1 |
| 2 | 98  | 109    | 8,1  | 28,8    | 17,5 |
| 3 | 102 | 117    | 10,4 | 37,3    | 21,1 |
| 4 | 96  | 106    | 12,7 | 45,0    | 23,1 |
| A | 90  | 105    | 3,5  | 3,5     | 3,5  |
| B | 95  | 132    | 3,5  | 4,2     | 3,5  |
| C | 110 | - *)   | 7,6  | - *)    | -    |
| D | 107 | - *)   | 14,2 | - *)    | -    |

*) keine thermische Behandlung

Patentansprüche:

1. Verfahren zur Herstellung von kerbschlagzähen Formmassen erhalten durch thermische Behandlung von Kunststoffmischungen, die überwiegend Poly(alkylenterephthalat) enthalten, in fester Form, dadurch gekennzeichnet, daß die Kunststoffmischung

A. 60 bis 97 Gew.-% Poly(alkylenterephthalat)

und

B. 3 bis 40 Gew.-% eines an sich bekannten Polyetheresteramids

enthält und daß die Kunststoffmischung bei Temperaturen 15 bis 60 °C unterhalb des Schmelzpunktes der reinen Komponente A. in einer Inertgasatmosphäre behandelt wird.

2. Kerbschlagzähe Formmassen zusammengesetzt entsprechend Anspruch 1, wobei sie einer thermischen Behandlung gemäß Anspruch 1 unterworfen worden sind.

## EUROPÄISCHER RECHERCHENBERICHT

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 098 316 (AKZO)<br><br>----- | | C 08 J 3/00<br>C 08 L 67/02 //<br>(C 08 L 67/02<br>C 08 L 79:02 ) |

RECHERCHIERTE
SACHGEBIETE (Int. Cl.4)

C 08 J
C 08 L

Der vorliegende Recherchenbericht wurde für alle Patentansprüche erstellt.

| Recherchenort<br>DEN HAAG | Abschlußdatum der Recherche<br>18-12-1984 | Prüfer<br>STIENON P.M.E. |
|---|---|---|